# DEMANDE DE BREVET EUROPEEN

(11) **EP 1 535 800 A1**
(43) Date de publication de la demande: **01.06.2005**
(21) Numéro de dépôt: 04292778.0
(22) Date de dépôt: 25.11.2004
(51) Int. Cl.: B60R 5/04, B60J 1/20

(54) **Dispositif de masquage intégré dans un sous-ensemble d'habitacle de véhicule automobile**

(30) Priorité: 25.11.2003 FR 0313844
(71) Demandeur: Faurecia Automotive Industrie, 92000 Nanterre (FR)
(72) Inventeur: Brion, Emmanuel, 08200 Sedan (FR)
(74) Mandataire: Domenego, Bertrand

(57) **Abrégé**

L'invention concerne un dispositif intégré de masquage (1) d'ouverture (2) entre au moins deux éléments (3,4) d'un habitacle de véhicule automobile, comprenant un écran souple (5) de masquage plus ou moins occultant, mobile entre une position extrême de masquage minimal dans laquelle l'écran (5) est escamoté dans l'un et/ou l'autre des éléments (3,4) de l'habitacle de véhicule automobile, et une position extrême de masquage maximal dans laquelle l'écran (5) est déployé selon une direction de déploiement (D) entre les deux éléments (3,4) de l'habitacle du véhicule automobile, l'un au moins des cotés (6,7) de l'écran (5), sensiblement perpendiculaire à la direction de déploiement (D), étant associé à l'un des éléments (3,4) de l'habitacle du véhicule automobile, selon l'invention, le dispositif comprend des moyens élastiques (8) montés entre le coté (6) de l'écran (5) et l'élément (3) de l'habitacle véhicule associé, ayant un allongement élastique selon une direction d'allongement (A) sensiblement perpendiculaire audit coté (6) de l'écran (5) générant une force de rappel (F) de l'écran (5) vers l'élément (6) associé quelle que soit la position extrême de masquage de l'écran

## Description

La présente invention concerne un dispositif de masquage intégré dans un sous-ensemble d'habitacle de véhicule automobile :

Ce type de dispositif de masquage intégré peut être utilisé indifféremment pour le masquage du contenu du coffre du véhicule dans la partie située entre les sièges et la tablette arrière ou pour le masquage pare-soleil de tout ou partie d'une vitre arrière ou de portière.

La constitution et le mode de fonctionnement d'un dispositif de masquage sont connus. Un tel dispositif comprend généralement un écran de masquage plus ou moins opaque intégré dans une pièce du véhicule. Cet écran est mobile entre une position extrême de masquage minimal et une position extrême de masquage maximal. En outre, certains dispositifs permettent de multiples positions de masquage intermédiaire entre les deux positions extrêmes.

Dans un premier mode de réalisation connu dit "écran à enrouleur", l'écran de masquage est souple, enroulé autour d'un axe intégré dans le panneau de porte ou la tablette arrière, et soumis à une contrainte élastique de rappel dans la position enroulée générée par l'axe. Ce mode de réalisation est coûteux et incompatible avec des véhicules de moyenne gamme ou des véhicules dit "économique".

Dans un autre mode de réalisation connu, l'écran de masquage n'est soumis à aucune force de tension. Il en résulte que dans toute autre position que la position extrême maximale, l'écran poche. Une telle solution, si elle est économiquement viable pour les gammes de véhicules envisagées, constitue un défaut de qualité perçue important pour le client final.

Un autre mode de réalisation connu envisage l'utilisation d'un écran élastique ayant un fort taux d'allongement permettant de passer de l'une a l'autre des positions extrêmes en jouant sur l'allongement élastique. Les problèmes de ce type de dispositif sont liés à la forme à envisager pour l'écran, l'écran, car l'allongement dans une direction induit inévitablement un rétrécissement dans l'autre direction. Là aussi, la qualité perçue s'en ressent.

L'un des buts de la présente invention est de proposer un dispositif de masquage économique donnant une qualité perçue acceptable par le client final.

A cet effet, l'invention concerne un dispositif intégré de masquage d'ouverture entre au moins deux éléments d'un habitacle de véhicule automobile, comprenant un écran souple de masquage plus ou moins opaque, mobile entre une position extrême de masquage minimal dans laquelle l'écran est escamoté dans l'un et/ou l'autre des éléments de l'habitacle de véhicule automobile, et une position extrême de masquage maximal dans laquelle l'écran est déployé selon une direction de déploiement entre les deux éléments de l'habitacle du véhicule automobile. L'un au moins des cotés de l'écran, sensiblement perpendiculaire à la direction de déploiement, est associé à l'un des éléments de l'habitacle du véhicule automobile. Selon la présente invention, le dispositif comprend des moyens élastiques montés entre le coté de l'écran et l'élément de l'habitacle associé, ayant un allongement élastique selon une direction d'allongement sensiblement perpendiculaire audit coté de l'écran générant une force de rappel de l'écran vers l'élément associé du véhicule automobile, quelle que soit la position extrême de masquage de l'écran.

Dans un mode de réalisation, l'écran est lui-même élastique avec un taux moyen d'allongement inférieur au taux d'allongement des moyens élastiques.

Selon une autre caractéristique de l'invention, des moyens élastiques sont montés entre chacun des deux cotés de l'écran sensiblement perpendiculaires à la direction de déploiement et un élément associé.

Selon une autre caractéristique de l'invention, le dispositif comprend au moins un élément de renvoi solidaire de l'élément associé de véhicule permettant un changement de direction d'allongement des moyens élastiques et/ou un changement de la direction de déploiement.

L'invention concerne aussi un sous-ensemble d'habitacle de véhicule automobile comprenant deux éléments définissant entre eux une ouverture et un dispositif de masquage tel que décrit ci-dessus pour masquer au moins partiellement ladite ouverture.

Dans un premier mode de réalisation, l'un des éléments est au moins un des sièges arrière mobile, et l'autre élément est une tablette arrière.

Dans un autre mode de réalisation, l'un des éléments est le panneau de porte, et l'autre des éléments est la partie supérieure du cadre de fenêtre de la porte.

Dans un mode de fonctionnement selon l'invention, les deux éléments sont mobiles l'un par rapport à l'autre, chacun des cotés de l'écran étant associé à un des éléments, et l'ouverture étant variable

Dans un autre mode de fonctionnement selon l'invention, l'un des cotés de l'écran est associé à un premier élément et l'autre coté est libre et déplaçable vers le deuxième élément selon la direction de déploiement et comprend des moyens d'association amovibles sur le deuxième élément.

L'invention sera mieux comprise à la lecture de la description qui va suivre, donnée uniquement à titre d'exemple, et faite en se référant aux dessins annexés, sur lesquels :
- la figure 1 est une vue partielle, schématique d'un dispositif selon l'invention appliqué à l'ouverture entre les sièges arrières et la tablette arrière selon l'invention,
- la figure 2 est une vue schématique en coupe du dispositif de la figure 1
- la figure 3 est une vue schématique d'un dispositif selon l'invention appliqué à un pare-soleil de porte, dans la position extrême minimale
- la figure 4 est une vue schématique d'un dispositif selon l'invention appliqué à un pare-soleil de porte, dans la position extrême maximale

L'invention concerne un dispositif intégré de masquage 1 d'ouverture 2 entre au moins deux éléments 3,4 d'un habitacle de véhicule automobile, comprenant un écran souple 5 de masquage plus ou moins opaque, mobile entre une position extrême de masquage minimal dans laquelle l'écran 5 est escamotée dans l'un et/ou l'autre des éléments 3,4 de l'habitacle de véhicule automobile, et une position extrême de masquage maximal dans laquelle l'écran 5 est déployée selon une direction de déploiement D entre les deux éléments 3,4 de l'habitacle du véhicule automobile. L'un au moins des cotés 6,7 de l'écran 5, sensiblement perpendiculaire à la direction de déploiement D, est associé à l'un des éléments 3,4 de l'habitacle du véhicule automobile. Selon la présente invention, le dispositif 1 comprend des moyens élastiques 8 montés entre le coté 6,7 de l'écran 5 et l'élément 3,4 de l'habitacle véhicule associé, ayant un allongement élastique selon une direction d'allongement A sensiblement perpendiculaire audit coté 6,7 de l'écran 5 générant une force de rappelle F de l'écran 5 vers l'élément associé 3,4 quelle que soit la position extrême de masquage de l'écran 5.

L'écran 5 peut être plus ou moins opaque en fonction du rôle qu'il doit jouer. A l'extrême, s'il a pour fonction de cacher, il peut être occultant.

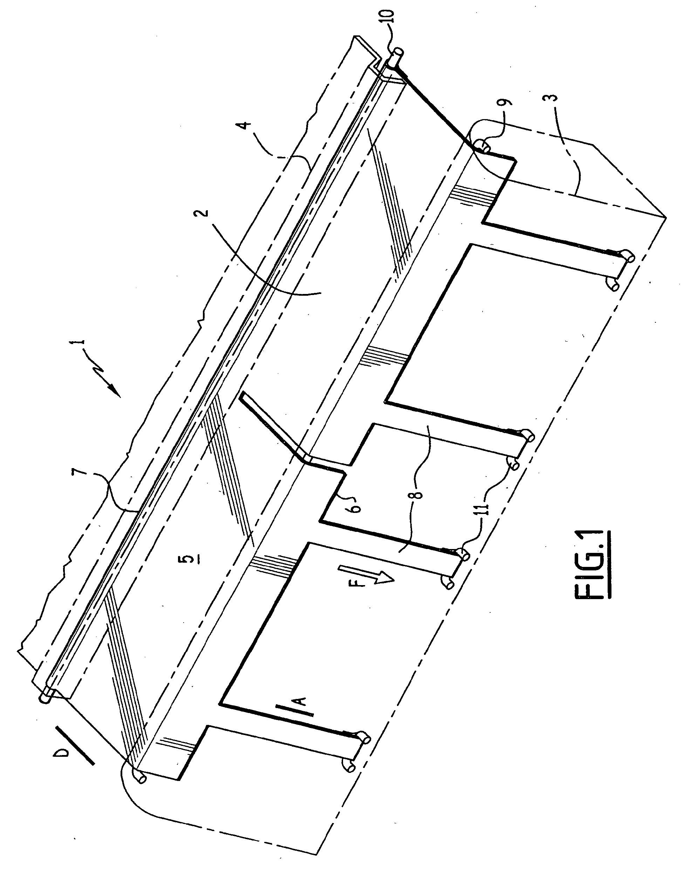

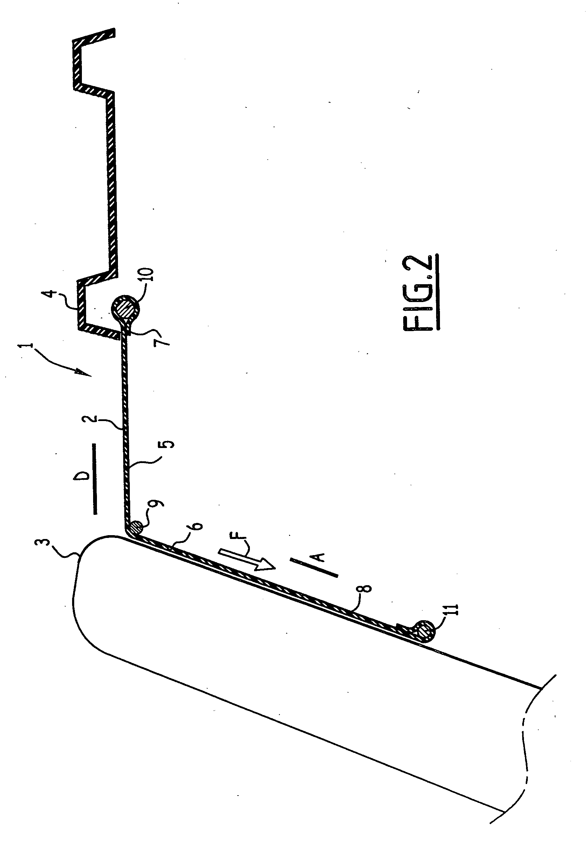

Une première illustration de l'invention est représentée sur les figures 1 et 2. les éléments 3,4 de l'habitacle véhicule utilisés sont d'une part le ou les siège(s) arrières 3 et d'autre part la tablette arrière 4. Les sièges arrières 3 de certains véhicules sont mobiles en translation, de ce fait, selon leur position, il se crée une ouverture 2 variable entre les sièges arrières 3 et la tablette arrière 4. le dispositif 1 selon l'invention a pour but de masquer cette ouverture afin notamment de cacher le contenu du coffre visible de l'extérieur par l'ouverture.

Dans le mode de réalisation proposé sur les figures 1 et 2, le dispositif 1 comprend au moins un élément de renvoi 9 solidaire du siège arrière mobile permettant d'avoir une direction d'allongement A des moyens élastiques 8 différente de la direction de déploiement D. Dans une réalisation non représentée, il peut y avoir plusieurs éléments de renvoi 9.

Des moyens de fixation 10 assure la solidarisation d'un premier coté 7 de l'écran 5 perpendiculaire à la direction de déploiement D à la tablette arrière 4, et des moyens de fixation 11 assure la solidarisation d'une première extrémité des moyens élastiques 8 au siège arrière 3. l'autre coté 6 de l'écran 5 perpendiculaire à la direction de déploiement D est solidarisé à l'autre extrémité des moyens élastiques 8. Dans ce mode de réalisation, le dispositif peut prendre de nombreuses positions intermédiaires entre les deux positions extrêmes.

Ainsi, en fonctionnement, si l'ouverture 2 diminue du fait que les sièges arrières 3 sont rapprochés de la tablette arrière 4, la surface d'écran nécessaire pour masquer l'ouverture 2 diminue. Les moyens élastiques 8 soumettant l'écran 5 à une force de rappelle F, maintiennent en tension l'écran et compense la réduction de surface de masquage nécessaire.

De manière équivalente, quand les sièges 3 sont éloignés de la tablette arrière 4, les moyens élastiques 8 maintiennent en tension l'écran et s'allongent pour permettre l'augmentation de surface de masquage nécessaire.

Les moyens élastiques 8 sont dimensionnés pour qu'en position extrême de masquage minimal de l'écran 5, qui correspond à une ouverture 2 minimale entre les sièges 3 et la tablette 4, l'écran 5 soit toujours sous tension et en position de masquage maximal de l'écran 5, lesdits moyens élastiques 8 ne sont pas visibles dans l'ouverture 2.

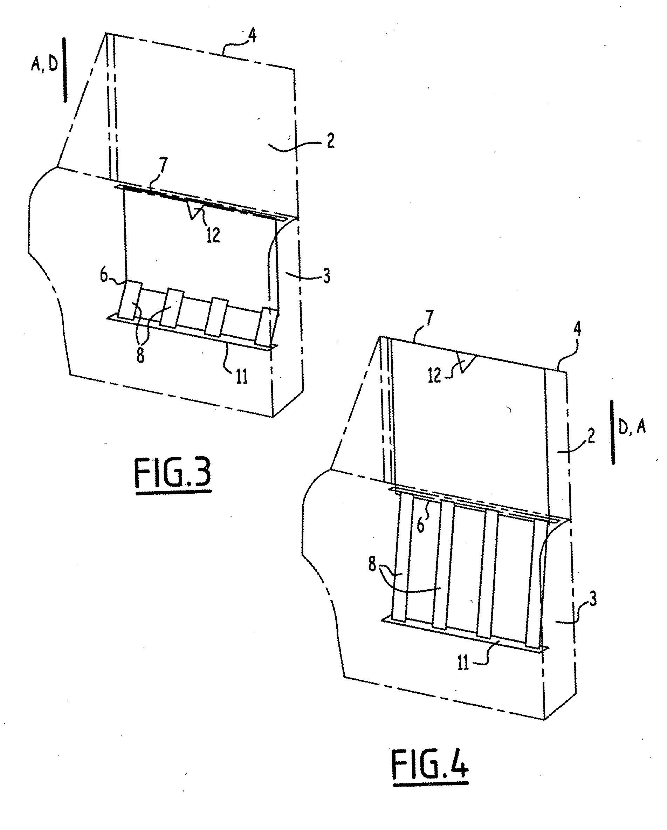

Dans une deuxième illustration de l'invention est représentée sur les figures 3 et 4. les éléments 3,4 de l'habitacle véhicule utilisés sont d'une part le caisson ou le panneau de porte 3 et d'autre part le montant supérieur 4 du cadre de vitre de la porte. L'ouverture 2 à masquer est donc la surface en regard de la vitre. Le dispositif 1 selon l'invention a pour but de masquer cette ouverture afin notamment de faire fonction de pare-soleil.

A la différence du mode de réalisation proposé dans les figures 1 et 2, un 7 des cotés (6,7) de l'écran 5 est libre et déplaçable vers le montant supérieur 4 du cadre de vitre de la porte selon la direction de déploiement et comprend des moyens d'association amovibles 12 sur le montant supérieur 4 du cadre de vitre de la porte le montant supérieur 4 du cadre de vitre de la porte.

En position extrême de masquage minimal, l'écran 5 est sensiblement complètement escamoté dans le caisson de porte, maintenu en tension par les moyens élastiques 8 et par les moyens d'association amovibles 12 coopérant avec le bord supérieur du caisson de porte.

En position extrême de masquage maximal, l'écran 5 est en regard de la vitre, maintenu en tension par les moyens élastiques 8 et par les moyens d'association amovibles 12 coopérant avec le montant supérieur 4 du cadre de vitre de la porte.

Dans le mode de réalisation des figures 3 et 4, l'écran présente une élasticité propre ayant préférentiellement un taux d'allongement inférieur à celui des moyens élastiques 8.

Dans ce cas les moyens élastiques sont dimensionnés pour arriver à leur allongement maximal avant que l'écran ne soit en position de masquage extrême maximal, le complément d'allongement étant alors réalisé par l'allongement de l'écran 5.

Bien entendu, les caractéristiques du mode de réalisation représentées sur les figures 3 et 4 peuvent être appliquées au mode de réalisation représenté figure 1 et 2 et vis versa.

Avantageusement, les cotés 6,7 sont rigides pour une meilleur tenue à la force de rappel.

## Revendications

1. Dispositif intégré de masquage (1) d'ouverture (2) entre au moins deux éléments (3,4) d'un habitacle de véhicule automobile, comprenant un écran souple (5) de masquage plus ou moins occultant, mobile entre une position extrême de masquage minimal dans laquelle l'écran (5) est escamoté dans l'un et/ou l'autre des éléments (3,4) de l'habitacle de véhicule automobile, et une position extrême de masquage maximal dans laquelle l'écran (5) est déployé selon une direction de déploiement (D) entre les deux éléments (3,4) de l'habitacle du véhicule automobile, l'un au moins des cotés (6,7) de l'écran (5), sensiblement perpendiculaire à la direction de déploiement (D), étant associé à l'un des éléments (3,4) de l'habitacle du véhicule automobile, **caractérisé en ce que** le dispositif comprend des moyens élastiques (8) montés entre le coté (6) de l'écran (5) et l'élément (3) de l'habitacle véhicule associé, ayant un allongement élastique selon une direction d'allongement (A) sensiblement perpendiculaire audit coté (6) de l'écran (5) générant une force de rappel (F) de l'écran (5) vers l'élément (6) associé quelle que soit la position extrême de masquage de l'écran, et **en ce que** l'un des éléments est au moins un siège arrière mobile et l'autre élément est une tablette arrière.

2. Dispositif selon la revendication 1, **caractérisé en ce que** l'écran (5) est lui-même élastique avec un taux moyen d'allongement différent du taux d'allongement des moyens élastiques (8).

3. Dispositif selon la revendication 1 ou 2 **caractérisé en ce que** des moyens élastiques sont montés entre chacun des deux cotés (6,7) de l'écran (5) sensiblement perpendiculaires à la direction de déploiement et respectivement l'un des éléments (3,4).

4. Dispositif selon l'une quelconque des revendications 1 à 3, **caractérisé en ce qu'**il comprend au moins un élément de renvoi (8) permettant un changement de direction d'allongement (A) des moyens élastiques (8) et/ou un changement de la direction de déploiement (D), et/ou un changement de la direction de la force de rappel (F).

5. Sous-ensemble d'habitacle de véhicule automobile comprenant deux éléments (3,4) définissant entre eux une ouverture (2) et un dispositif de masquage (1) pour masquer au moins partiellement ladite ouverture (2), **caractérisé en ce que** l'un des éléments est au moins un siège arrière mobile et l'autre élément est une tablette arrière, et **en ce que** le dispositif de masquage (1) est un dispositif tel que revendiqué dans l'une quelconque des revendications 1 à 4.

6. Sous-ensemble d'habitacle de véhicule automobile selon la revendication 5, **caractérisé en ce que** les deux éléments (3,4) sont mobiles l'un par rapport à l'autre, chacun des cotés (6,7) de l'écran (5) étant associé à un des éléments (3,4), et l'ouverture (2) étant variable.

7. Sous-ensemble d'habitacle de véhicule automobile selon l'une des revendications 5 ou 6, caractérisé l'un (6) des cotés (6,7) de l'écran (5) est associé à un premier élément (3) à travers les moyens élastiques (8) et l'autre coté (7) est libre et déplaçable vers le deuxième élément (4) selon la direction de déploiement (D) et comprend des moyens d'association amovibles (12) avec le deuxième élément (4).
